# EUROPÄISCHE PATENTSCHRIFT

(11) **EP 3 936 273 B1**
(45) Veröffentlichungstag und Bekanntmachung des Hinweises auf die Patenterteilung: **13.11.2024**
(21) Anmeldenummer: 20184202.8
(22) Anmeldetag: 06.07.2020
(51) Int. Cl.: B23K 20/10, B23K 37/00

(54) **VORRICHTUNG UND VERFAHREN ZUM ULTRASCHALLSCHWEISSEN**
DEVICE AND METHOD FOR ULTRASONIC WELDING
DISPOSITIF ET PROCÉDÉ DE SOUDAGE PAR ULTRASONS

(43) Veröffentlichungstag der Anmeldung: 12.01.2022
(73) Patentinhaber: Telsonic Holding AG, 9552 Bronschhofen (CH)
(72) Erfinder: Hünig, Thomas, 63868 Grosswallstadt (DE)
(74) Vertreter: Hepp Wenger Ryffel AG

(56) Entgegenhaltungen:
- WO-A1-2017/024041
- WO-A2-2017/001255
- DE-A1- 102008 029 769
- DE-U1- 202008 007 271
- JP-A- H0 724 414
- JP-U- S5 612 587

## Beschreibung

Die vorliegende Erfindung befasst sich mit Vorrichtungen und Verfahren zum Ultraschallschweissen.

Eine gattungsgemässe Vorrichtung ist beispielsweise aus der WO 2017/001255 A2 bekannt. Offenbart sind dort Ultraschallschweissvorrichtungen mit einer Torsionssonotrode, die im Bereich eines torsionalen Schwingungsknotens gelagert sind. Im Bereich dieses torsionalen Schwingungsknotens wird ein Temperierfluid eingeleitet, das zur Kühlung der Sonotrode im Bereich der Schweissfläche führt. Eine derartige Temperierung ist besonders wirksam, wenn sich die Schweissfläche in der Nähe des torsionalen Schwingungsknotens befindet. Ist dies nicht der Fall, so kann in vielen Fällen keine ausreichende Kühlung im Bereich der Schweissfläche erreicht werden.

Eine weitere gattungsgemässe Vorrichtung ist aus der DE 102 50 741 A1 bekannt. Auch diese Vorrichtung ermöglicht aber keine ausreichende Kühlung von Schweissflächen.

Es ist daher eine Aufgabe der vorliegenden Erfindung, eine Vorrichtung und ein Verfahren zum Ultraschallschweissen vorzuschlagen, mit denen die genannten Nachteile überwunden werden können. Insbesondere soll eine ausreichende Kühlung einer Sonotrode im Bereich ihrer Schweissfläche erzielt werden.

In einem ersten Aspekt betrifft die Erfindung eine Vorrichtung zum Ultraschallschweissen. Diese enthält eine Sonotrode, die bezüglich einer Längsachse zu Schwingungen anregbar ist.

In einer Ausführungsform kann die Sonotrode als Linearsonotrode ausgebildet sein, die zu resonanten Längsschwingungen entlang der Längsachse anregbar ist. In einer anderen Ausführungsform kann die Sonotrode als Torsionssonotrode ausgebildet sein, die zu resonanten Torsionsschwingungen um die Längsachse anregbar ist. Um insbesondere ein Metallschweissen durchführen zu können, weist die Sonotrode mindestens eine, bevorzugt mindestens zwei Schweissflächen auf, die parallel zur Längsachse verläuft bzw. verlaufen. Die Sonotrode kann auch eine die Längsachse insbesondere durchgängig umlaufende Schweissfläche aufweisen.

Weiterhin verfügt die Vorrichtung über eine Temperiereinrichtung zum Temperieren der Sonotrode. Unter einem Temperieren wird hier um im Folgenden verstanden, dass die Temperatur der Sonotrode in einem vorgegebenen Temperaturbereich liegt. Zu diesem Zweck kann die Sonotrode gekühlt und/oder geheizt werden.

Die Temperiereinrichtung verfügt über einen Zuführkanal, durch den ein Temperierfluid in die Sonotrode einführbar ist. Weiterhin enthält die Temperiereinrichtung mindestens einen im Inneren der Sonotrode verlaufenden Strömungskanal, der mit dem Zuführkanal fluidverbunden ist.

Zudem weist die Temperiereinrichtung mindestens eine im Inneren der Sonotrode verlaufende Wärmetransporteinrichtung auf, die mit dem durch den Strömungskanal strömenden Temperierfluid thermisch gekoppelt ist.

Weiterhin enthält die Temperiereinrichtung einen Abführkanal, durch den das Temperierfluid aus der Sonotrode ausführbar ist und der mit dem Strömungskanal fluidverbunden ist. Auf diese Weise kann das Temperierfluid durch den Zuführkanal eingeführt werden, durch den Strömungskanal strömen und anschliessend aus dem Abführkanal ausgeführt werden.

Erfindungsgemäss ist die Wärmetransporteinrichtung zum Wärmetransport entlang einer Längsachse der Sonotrode ausgebildet und angeordnet. Dies bedeutet, dass ein Wärmetransport von einem ersten Bereich der Sonotrode zu einem zweiten Bereich der Sonotrode stattfindet, wobei der erste Bereich und der zweite Bereich bezüglich der Längsachse gegeneinander versetzt angeordnet sind. Auf diese Weise kann also Wärme vom Temperierfluid, welches die Sonotrode im Strömungskanal durchströmt, in einen zweiten Bereich hinein oder aus einem zweiten Bereich heraus transportiert werden, in dem oder benachbart zu welchem sich die Schweissfläche der Sonotrode befindet. Wie sich überraschend gezeigt hat, treten hierbei keine eigentlich erwarteten störenden Kavitationseffekte auf.

Beispielsweise kann die Wärmetransporteinrichtung zum Wärmetransport in einer Wärmetransportrichtung ausgebildet und angeordnet sein, die zumindest abschnittsweise unter einem Winkel zur Längsachse verläuft, der kleiner als 30°, bevorzugt kleiner als 10°, weiter bevorzugt kleiner als 5° und besonders bevorzugt kleiner als 1° ist. Eine solche Ausrichtung im Wesentlichen parallel zur Längsachse ist besonders dann vorteilhaft, wenn die Sonotrode in Richtung auf die Schweissfläche zu eine Einschnürung aufweist, wie sich an sich zur Amplitudenverstärkung üblich ist.

In einer möglichen Ausführungsform kann die Wärmetransporteinrichtung mindestens einen im Inneren der Sonotrode verlaufenden Temperierkanal aufweisen. Durch diesen Temperierkanal kann ein Temperierfluid strömen, so dass ein konvektiver Wärmetransport stattfindet. Das Temperierfluid kann das gleiche sein, welches durch den Zuführkanal in die Sonotrode eingeführt und durch den Abführkanal aus der Sonotrode ausgeführt werden kann. In diesem Fall ist der Temperierkanal Teil des Strömungskanals oder stimmt mit diesem überein; in diesem Fall sorgt bereits das Strömen des Temperierfluids durch den Strömungskanal für den Wärmetransport entlang der Längsachse der Sonotrode.

Alternativ können aber auch zwei voneinander fluidgetrennte Kreisläufe vorgesehen sein, die miteinander thermisch gekoppelt sind.

Alternativ oder zusätzlich zu einem konvektiven Wärmetransport kann die Wärmetransporteinrichtung aber auch Mittel zur Wärmeleitung enthalten. Beispielsweise kann sie einen Wärmeleiter enthalten, mit dem Wärme vom Temperierfluid entlang der Längsachse geleitet werden kann.

Mit weiterem Vorteil sind der Zuführkanal und/oder der Abführkanal in einem lokalen Schwingungsminimum der Sonotrode angeordnet. Auf diese Weise wird das durch den Zuführkanal zugeführte bzw. das durch den Abführkanal ausgeführte Temperierfluid nur geringfügig von den Schwingungen der Sonotrode beeinträchtigt. Zudem werden Anschlüsse am Zuführkanal bzw. am Abführkanal schwingungsmässig von der Sonotrode entkoppelt.

In einer möglichen Ausführungsform sind der Zuführkanal und der Abführkanal in einem gemeinsamen lokalen Schwingungsminimum der Sonotrode angeordnet. Eine derartige Anordnung ist beispielsweise dann sinnvoll, wenn die Länge der Sonotrode entlang der Längsachse bei Anregung mit einer Resonanzfrequenz eine halbe Wellenlänge beträgt.

In anderen Ausführungsformen sind der Zuführkanal und der Abführkanal an verschiedenen Positionen bezüglich der Längsachse angeordnet. Insbesondere können sie in zwei verschiedenen lokalen Schwingungsminima der Sonotrode angeordnet sein. Bei dieser Anordnung wird also das Temperierfluid im Bereich eines ersten Schwingungsminimums in die Sonotrode eingeführt und im Bereich eines zweiten Schwingungsminimum aus dieser ausgeführt. Diese Anordnung ist beispielsweise sinnvoll, wenn die Länge der Sonotrode entlang der Längsachse bei Anregung mit einer Resonanzfrequenz eine ganze Wellenlänge beträgt. Besonders vorteilhaft ist diese Anordnung, wenn die Schweissfläche bzw. mindestens eine der Schweissflächen bezüglich der Längsachse zwischen dem Zuführkanal und dem Abführkanal angeordnet ist.

Mit besonderem Vorzug verlaufen der Zuführkanal und/oder der Abführkanal unter einem Winkel zur Längsachse der Sonotrode, der im Bereich von 60° bis 120°, bevorzugt 80° bis 100°, weiter bevorzugt 85° bis 95° und besonders bevorzugt 89° bis 91° liegt. Je näher der genannte Winkel bei 90° liegt, desto grösser ist die Schwingungsentkopplung entlang der gesamten Länge des Zuführkanals bzw. des Abführkanals.

Der Zuführkanal und/oder Abführkanal können über Innengewinde verfügen, in die Fluidanschlüsse für das Zuführen bzw. Abführen des Temperierfluids eingeschraubt werden können.

Zur Positionierung der Wärmetransporteinrichtung kann die Sonotrode mindestens eine Bohrung mit einer Innenwand aufweisen, wobei die Innenwand zumindest teilweise den Temperierkanal begrenzt. Somit kann ein Temperierfluid entlang dieser Bohrung strömen, um einen konvektiven Wärmetransport zu ermöglichen. Unter einer Bohrung wird hier und im Folgenden eine längliche Öffnung verstanden. Der Begriff "Bohrung" ist nicht beschränkt auf längliche Öffnungen, die durch Bohren erzeugt wurden. Beispielsweise sind auch erodierte längliche Öffnungen umfasst. Alternativ dazu könnte eine Bohrung im Sinne der vorliegenden Erfindung auch durch das Zusammensetzen der Sonotrode aus mehreren Teilen, durch Giessverfahren oder durch 3D-Druck erzeugt werden. Sind mehrere Bohrungen vorhanden, so können diese parallel zueinander verlaufen.

Bevorzugt münden der Zuführkanal und der Abführkanal in die Bohrung ein, so dass der Zuführkanal, der Temperierkanal und der Abführkanal miteinander fluidverbunden und einen Kreislauf bilden, der von ein und demselben Temperierfluid durchströmbar ist.

Um einen Wärmetransport in der oben genannten bevorzugten Wärmetransportrichtung zu ermöglichen, ist es vorteilhaft, wenn die Bohrung unter einem Winkel zur Längsachse verläuft, der kleiner als 30°, bevorzugt kleiner als 10°, weiter bevorzugt kleiner als 5° und besonders bevorzugt kleiner als 1° ist.

Die Bohrung kann über mindestens ein freies Ende verfügen, welches mit einem Dichtstopfen fluiddicht verschlossen ist. Das "freie Ende" ist hierbei dahingehend zu verstehen, dass die Bohrung ohne den Dichtstopfen an einer Oberfläche der Sonotrode ausmünden würde.

Um eine weitgehende Schwingungsentkopplung zu erreichen, ist es vorteilhaft, wenn der Dichtstopfen im Bereich eines Schwingungsminimums der Sonotrode angeordnet und dort mit ihr verbunden ist.

In einigen Ausführungsformen kann die Bohrung als Sacklochbohrung ausgeführt sein, deren geschlossenes Ende (also das dem freien Ende gegenüberliegende Ende) im Bereich der Schweissfläche bzw. mindestens einer der Schweissflächen der Sonotrode oder benachbart zu der Schweissfläche angeordnet ist.

Mit besonderem Vorzug ist in der Bohrung ein insbesondere stabförmiges Führungselement derart angeordnet, dass es die Bohrung entlang eines Teils ihrer Länge in einen ersten Temperierkanal und einen zweiten Temperierkanal aufteilt, sodass das Temperierfluid zumindest teilweise vom Zuführkanal in einer ersten Richtung entlang der Längsachse durch den ersten Temperierkanal und danach in einer der ersten Richtung entgegengesetzten zweiten Richtung durch den zweiten Temperierkanal und zum Abführkanal führbar ist.

Günstig ist es dabei, wenn das Führungselement die Bohrung nicht vollständig fluiddicht in den ersten Temperierkanal und den zweiten Temperierkanal aufteilt. Vielmehr ist es vorteilhaft, wenn das Führungselement nicht in direktem Kontakt mit der Sonotrode steht. Hierdurch kann eine Schwingungsentkopplung zwischen der Sonotrode und dem Führungselement erreicht werden. Bevorzugt strömt also ein gewisser Teil des Temperierfluids nicht entlang der gesamten Länge des Führungselementes. Insgesamt findet aber ein konvektiver Wärmetransport entlang der Längsachse statt.

Das Führungselement kann beispielsweise aus einem kupferbasierten Material, wie etwa Kupferberyllium oder Messing, oder aus Federstahl, Stahl oder einem Kunststoff bestehen.

Wenn die Bohrung mindestens ein freies Ende aufweist, welches mit einem Dichtstopfen fluiddicht verschlossen ist, ist es von Vorteil, wenn das Führungselement vom Dichtstopfen gehalten ist. Über den Dichtstopfen ist das Führungselement dann indirekt mit der Sonotrode verbunden.

Der Dichtstopfen sollte aus einem ausreichend dichtenden und festen Material bestehen, beispielsweise aus Messing, Stahl oder einem den genannten Anforderungen entsprechenden Kunststoff. In einer möglichen Variante kann der Dichtstopfen durch ein 3D-Druckverfahren hergestellt werden. Dies erlaubt die Fertigung von Dichtstopfen mit komplexer Geometrie.

Die Befestigung und Abdichtung des Dichtstopfens kann in an sich bekannter Weise erfolgen. In einer möglichen Ausführungsform kann der Dichtstopfen mittels einer Gewindeverbindung in der Bohrung gehalten sein. Dies bewirkt eine stabile, einfache und lösbare Verbindung zwischen Dichtstopfen und Sonotrode. Alternativ oder zusätzlich können Befestigung und Abdichtung beispielsweise mit einem Klebeband, einem Dichtungsband, welches beispielsweise aus Teflon bestehen kann, mit einem Dichtungskleber oder mit Hanf bewerkstelligt werden.

Das Führungselement und der Dichtstopfen können in einigen Ausführungsformen miteinander einstückig ausgebildet sein. Zur Herstellung kann ein 3D-Druckverfahren verwendet werden, wodurch insbesondere komplexe Geometrien realisiert werden können.

Besonders vorteilhaft ist es, wenn ein erster Temperierkanal durch eine im Inneren des Führungselements verlaufende Führungsbohrung gebildet ist, die im Bereich einer Schweissfläche der Sonotrode an einer endseitigen Ausmündungsöffnung ausmündet, und ein zweiter Temperierkanal zwischen dem Führungselement und der in der Sonotrode verlaufenden Bohrung gebildet ist. Dies ermöglicht es, das Temperierfluid in die Nähe der Schweissfläche zu führen, ohne dass es zuvor in direktem Kontakt mit der Sonotrode oder dem durch den zweiten Temperierkanal zurückgeführten Temperierfluid gerät. Hierdurch kann eine effektivere Kühlung erzielt werden.

Bevorzugt verläuft die Führungsbohrung in Richtung der Längsachse der Sonotrode. Das der endseitigen Ausmündungsöffnung gegenüberliegende Ende der Führungsbohrung kann direkt oder indirekt mit dem Zuführkanal verbunden sein.

An der Aussenseite des Führungselements kann dieses mindestens eine Kerbe aufweisen, die in einem spitzen Winkel zur Längsachse der Sonotrode verläuft und zusammen mit der Innenwand der in der Sonotrode gebildeten Bohrung den zweiten Temperierkanal definiert. Auf diese Weise kann die Strömung des Temperierfluids im Temperierkanal auf definierte Weise geführt werden. Mit besonderem Vorzug ist die Kerbe im Wesentlichen helixförmig ausgebildet, wodurch eine bezüglich der Umfangsrichtung homogenere Temperierung erzielt werden kann.

Das der endseitigen Ausmündungsöffnung gegenüberliegende Ende der Kerbe kann direkt oder indirekt mit dem Abführkanal verbunden sein.

Zweckmässigerweise enthält die Temperiereinrichtung eine ausserhalb der Sonotrode angeordnete Temperaturkontrolleinheit, welche derart ausgebildet und angeordnet ist, dass die Temperatur des in den Zuführkanal eingeführten Temperierfluids mittels der Temperaturkontrolleinheit steuer- oder regelbar ist. Auf diese Weise kann auch die Temperatur der Sonotrode gesteuert oder geregelt werden, insbesondere die Temperatur einer Schweissfläche einer Sonotrode.

Die Temperiereinrichtung kann zusätzlich mindestens eine äussere Temperiereinheit zum Temperieren, insbesondere zum Kühlen und/oder Heizen, der Sonotrode von aussen aufweisen. Um eine möglichst homogene Temperierung zu erreichen und damit potentielle Spannungen oder Querschwingungen zu vermeiden, kann es sinnvoll sein, wenn die mindestens eine äussere Temperiereinheit ausgebildet und angeordnet ist bzw. sind, um die Sonotrode von allen zugänglichen Seiten zu temperieren. Zu diesem Zweck kann beispielsweise beidseits der Sonotrode jeweils eine äussere Temperiereinheit vorhanden sein.

Ein weiterer Aspekt der Erfindung besteht in einem Verfahren zum Temperieren, insbesondere zum Kühlen und/oder Heizen, einer Sonotrode einer wie oben beschriebenen Vorrichtung. Das Verfahren enthält die Schritte
a) Einführen eines Temperierfluids durch den Zuführkanal und in die Sonotrode hinein,
b) Durchführen des Temperierfluids durch den Strömungskanal,
c) Abführen des Temperierfluids durch den Abführkanal und aus der Sonotrode heraus.

Das Temperierfluid kann eine Flüssigkeit sein, beispielsweise Wasser, Glykol, ein Temperieröl oder ein anderes wie in Klimaanlagen üblicherweise verwendetes Fluid. Ein Temperieröl ist besonders dann vorteilhaft, wenn das Temperierfluid hohen Temperaturen ausgesetzt ist. Alternativ dazu kann das Temperierfluid aber auch ein Gas sein, bei dem es sich besonders bevorzugt um ein inertes Gas wie beispielsweise Stickstoff handelt.

Nachfolgend wird die Erfindung anhand von zwei Ausführungsbeispielen und mehreren Zeichnungen erläutert. Darin zeigen
- Figur 1:: eine Schnittansicht einer Sonotrode einer ersten erfindungsgemässen Vorrichtung zum linearen Ultraschallschweissen mit einer halben Wellenlänge;
- Figur 2a:: eine perspektivische und teilweise geschnittene Ansicht einer Sonotrode einer zweiten erfindungsgemässen Vorrichtung zum linearen Ultraschallschweissen mit einer ganzen Wellenlänge;
- Figur 2b:: eine Schnittansicht der zweiten erfindungsgemässen Ausführungsform entlang einer Längsachse der Sonotrode inklusive einer Temperaturkontrolleinheit und einer Temperiereinheit;
- Figur 3:: eine Schnittansicht einer Sonotrode einer dritten erfindungsgemässen Vorrichtung mit einem im Bereich der Schweissfläche ausmündenden Abführkanal;
- Figur 4:: eine Schnittansicht einer Sonotrode einer vierten erfindungsgemässen Vorrichtung mit zwei fluidgetrennten Kreisläufen;
- Figur 5:: eine schematische Ansicht einer Sonotrode einer fünften erfindungsgemässen Vorrichtung mit einem Wärmeleiter;
- Figur 6:: eine Schnittansicht einer sechsten erfindungsgemässen Ausführungsform mit einem Führungselement mit einer helixförmigen Kerbe;
- Figur 7a:: eine erste perspektivische Ansicht des Führungselements der Ausführungsform gemäss Figur 6;
- Figur 7b:: eine zweite perspektivische Ansicht des Führungselements der Ausführungsform gemäss Figur 6.

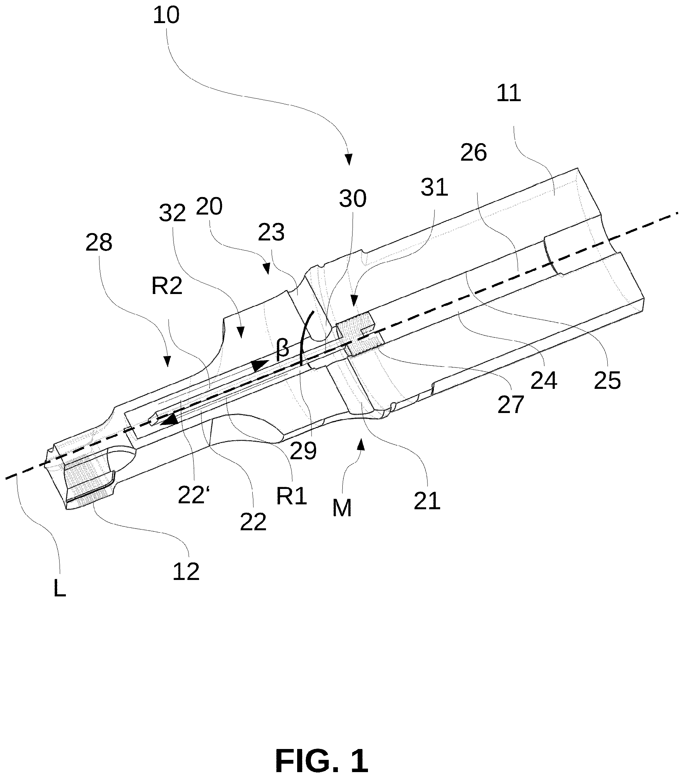

Die in Figur 1 gezeigte Linearsonotrode 11 erstreckt sich entlang einer Längsachse L, in der sie zu resonanten Längsschwingungen anregbar ist. Entlang der Längsachse L hat die Sonotrode 11 die Länge einer halben Wellenlänge, wenn sie mit einer Resonanzfrequenz angeregt wird. An einem Ende verfügt die Sonotrode 11 über einen Sonotrodenkopf mit zwei Schweissflächen 12, von denen hier nur eine sichtbar ist, die mit einem zu schweissenden, hier nicht dargestellten Bauteil in Kontakt gebracht werden können.

Die Vorrichtung 10 enthält weiterhin eine Temperiereinrichtung 20, mit der die Sonotrode 11 temperiert werden kann. Insbesondere kann die Sonotrode 11 gekühlt und/oder geheizt werden.

Durch einen Zuführkanal 21 kann ein Temperierfluid in die Sonotrode 11 eingeführt werden. Im Inneren der Sonotrode 11 verläuft ein Strömungskanal 31, der mit dem Zuführkanal 21 fluidverbunden ist. Des Weiteren verfügt die Temperiereinrichtung 20 über einen Abführkanal 23, durch den das Temperierfluid aus der Sonotrode 11 ausführbar ist. Der Zuführkanal 21 und der Abführkanal 23 sind in einem gemeinsamen (und in diesem Ausführungsbeispiel einzigen) Schwingungsminimum M der Sonotrode 11 angeordnet. Sowohl der Zuführkanal 21 als auch der Abführkanal 23 verlaufen unter einem Winkel β zur Schwingungsrichtung S, der in diesem Beispiel 90° beträgt.

Die Temperiereinrichtung 20 verfügt ferner über eine erfindungsgemässe Wärmetransporteinrichtung 32, die zum Wärmetransport entlang der Längsachse L ausgebildet und angeordnet ist und die im Folgenden näher erläutert wird:
Entlang der Längsachse L erstreckt sich in der Sonotrode 11 eine Sacklochbohrung 24 mit einer Innenwand 25. Sowohl der Zuführkanal 21 als auch der Abführkanal 23 münden in die Bohrung 24 ein. Ein geschlossenes Ende 28 der Sacklochbohrung 24 ist benachbart zur Schweissfläche 12 angeordnet. Zur Amplitudenverstärkung verjüngt sich die Sonotrode 11 in Richtung der Schweissfläche 12. Daher ist es aus Stabilitätsgründen erforderlich, dass sich die Bohrung nur etwa 1/8 der Wellenlänge in Richtung der Schweissfläche 12 erstreckt. Auch dies wird im Rahmen der vorliegenden Erfindung als Anordnung "im Bereich der Schweissfläche" 12 angesehen.

An dem dem geschlossenen Ende 28 gegenüberliegenden freien Ende 26 ist die Sacklochbohrung 24 mit einem Dichtstopfen 27 fluiddicht verschlossen. Dieser Dichtstopfen 27 verhindert das Ausströmen des Temperierfluids durch das freie Ende 26 der Sacklochbohrung 24. Der Dichtstopfen 27 ist in diesem Ausführungsbeispiel mittels einer Gewindeverbindung in der Sacklochbohrung 24 gehalten. Zum Zwecke der Schwingungsentkopplung besteht der Dichtstopfen 27 bevorzugt aus einem elastischen Material, wie beispielsweise einem Kunststoff.

In der Sacklochbohrung 24 ist ein stabförmiges Führungselement 29 angeordnet, welches sich entlang der Längsachse L erstreckt. Das Führungselement 29 wird vom Dichtstopfen 27 gehalten. Es steht nicht in direktem Kontakt mit der Sonotrode 11, sondern ist lediglich indirekt über den Dichtstopfen 27 mit dieser verbunden. Das Führungselement 29 kann beispielsweise aus Federstahl bestehen.

Das Führungselement 29 ist derart angeordnet, dass es die Sacklochbohrung 24 entlang eines Teils ihrer Länge in einen ersten Temperierkanal 22 und einen zweiten Temperierkanal 22' aufteilt, ohne dass es sich jedoch um eine fluiddichte Aufteilung handelt. Auf diese Weise kann das Temperierfluid teilweise vom Zuführkanal 21 in einer ersten Richtung R1 entlang der Längsachse L durch den ersten Temperierkanal 22 und danach in einer der ersten Richtung R1 entgegengesetzten zweiten Richtung R2 durch den zweiten Temperierkanal 22' und zum Abführkanal 23 geführt werden.

Auf diese Weise wird insgesamt eine Wärmetransporteinrichtung 32 geschaffen, die einen konvektiven Wärmetransport entlang der Längsachse L ermöglicht. Obwohl also das Temperierfluid zur Schwingungsentkopplung an einem Schwingungsminimum M eingeführt und ausgeführt wird, wird eine Temperierung im Bereich der Schweissfläche 12 erreicht.

Die Temperiereinrichtung 20 enthält ferner eine ausserhalb der Sonotrode 11 angeordnete Temperaturkontrolleinheit 30, welche derart ausgebildet und angeordnet ist, dass die Temperatur des in den Zuführkanal 21 eingeführten Temperierfluids mittels der Temperaturkontrolleinheit 30 regelbar ist. Zur Vereinfachung der Darstellung sind die Verbindungsleitungen zwischen der Temperaturkontrolleinheit 30 und der Sonotrode 11 nicht gezeigt. Weiterhin enthält die Temperiereinrichtung 22 beidseits der Sonotrode 11 jeweils eine äussere Temperiereinheiten 33 zum Temperieren, insbesondere zum Kühlen, der Sonotrode 11 von aussen.

Als Temperierfluid kann Wasser oder Glykol oder im Falle hoher Temperaturen ein Temperieröl verwendet werden.

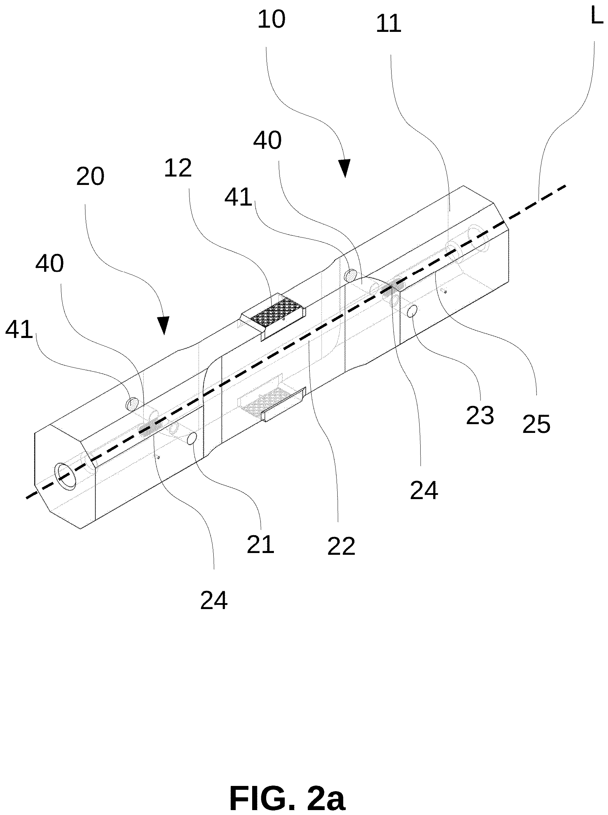

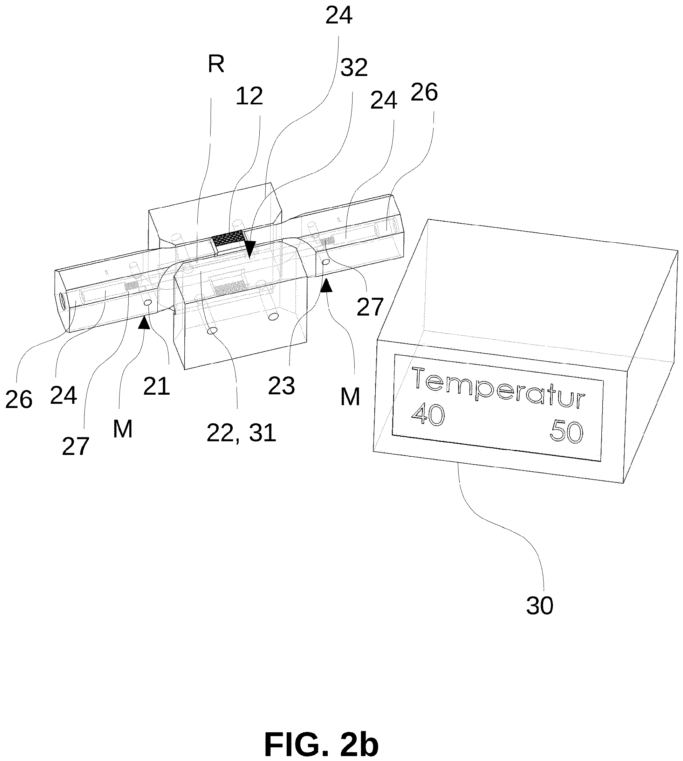

Die in den Figuren 2a und 2b dargestellte zweite erfindungsgemässe Vorrichtung zum Ultraschallschweissen 10 enthält eine Linearsonotrode 11, die zu resonanten Längsschwingungen entlang der Längsachse L anregbar ist. Entlang der Längsachse L hat sie die Länge einer ganzen Wellenlänge und verfügt über zwei bezüglich der Längsachse L voneinander beabstandete Schwingungsminima M. Anders als in dem in Figur 1 dargestellten Ausführungsbeispiel sind hier der Zuführkanal 21 und der Abführkanal 23 an zwei verschiedenen Schwingungsminima M angeordnet. Der Zuführkanal 21 und der Abführkanal 23 sind jeweils durch einen Teil einer Querbohrung 40 gebildet. Aus akustischen Gründen durchdringen die Querbohrungen 40 die Sonotrode 11 vollständig, sind jedoch an dem dem Zuführkanal 21 bzw. dem dem Abführkanal 23 abgewandten Ende durch Stopfen 41 verschlossen.

Weiterhin enthält die Sonotrode 11 gemäss Figuren 2a und 2b nur eine einzige axiale Bohrung 24, welche sich entlang der gesamten Länge der Sonotrode 11 erstreckt. Beide freien Enden 26 der Bohrung 24 sind mit einem jeweiligen Dichtstopfen 27 fluiddicht verschlossen. Zwei Schweissflächen 12 der Sonotrode 11 sind bezüglich der Längsachse L zwischen dem Zuführkanal 21 und dem Abführkanal 23 angeordnet. In diesem Ausführungsbeispiel strömt das Temperierfluid innerhalb der Bohrung 24 nur in einer einzigen Richtung R1. Die Bohrung 24 definiert in diesem Beispiel sowohl den Strömungskanal als auch den Temperierkanal. Im Gegensatz zur Ausführungsform gemäss Figur 1 ist hier also kein Führungselement erforderlich, welches die Bohrung 24 in zwei Temperierkanäle aufteilt.

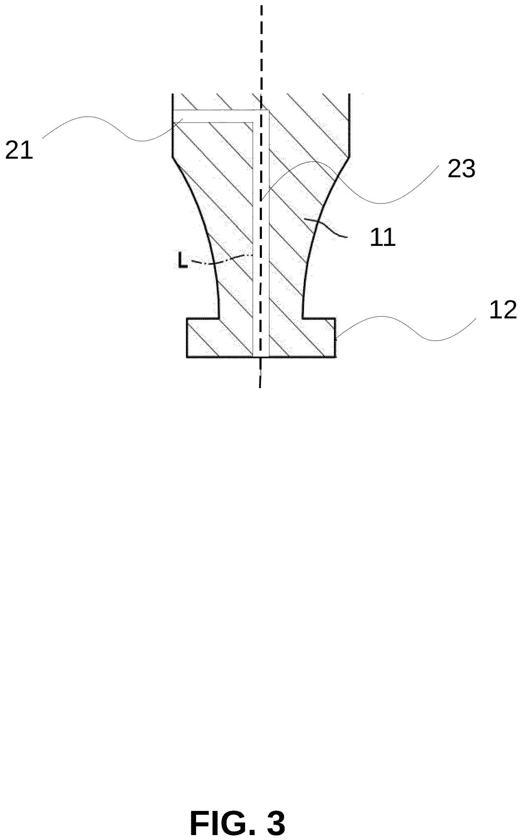

In Figur 3 enthält die Sonotrode 11 einen Abführkanal 23, der nicht in einem Schwingungsminimum, sondern in der Nähe der Schweissfläche 12 ausmündet, also in einem Schwingungsmaximum. Als Temperierfluid wird hier ein inertes Gas wie beispielsweise Stickstoff verwendet, um die Schweissfläche 12 zu kühlen.

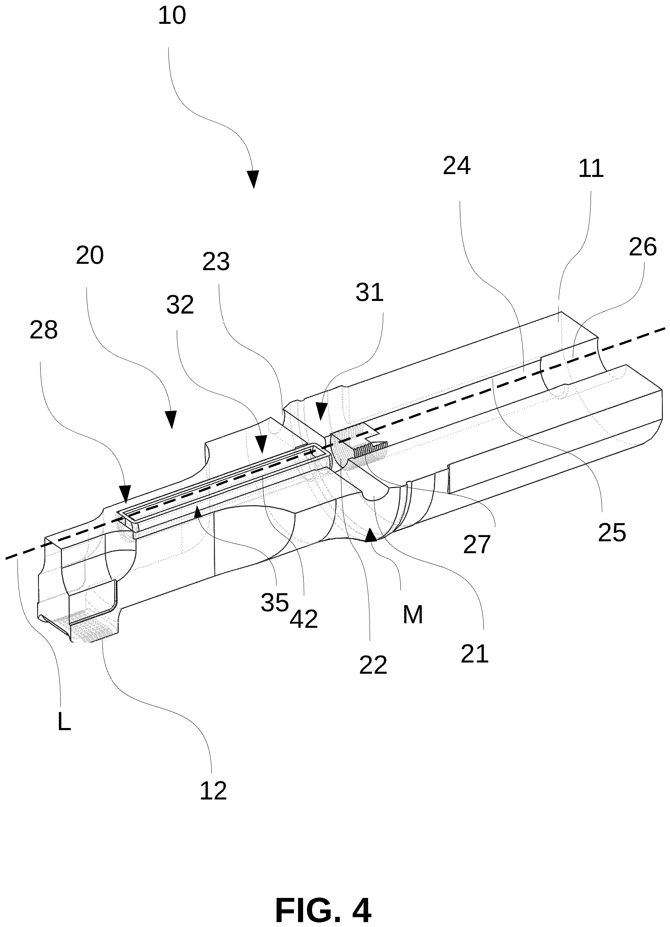

In Figur 4 ist eine Sonotrode 11 dargestellt, bei der der Strömungskanal 31 und der Temperierkanal 22 fluidgetrennt sind, die beiden Kreisläufe aber thermisch gekoppelt sind. Hierzu ist in der Sonotrode 11 eine Gaspatrone 35 aufgenommen, die einen im Wesentlichen zylindrischen Hohlraum 42 aufweist, in dem sich ein Gas befindet. Bei Vorliegen einer Temperaturdifferenz zwischen dem der Schweissfläche 12 zugewandten Ende der Gaspatrone 35 und dem gegenüberliegenden, in den Temperierkanal 22 mündenden Ende der Gaspatrone 35 entsteht im Hohlraum 42 eine konvektive Gasströmung, die für eine Temperierung sorgt.

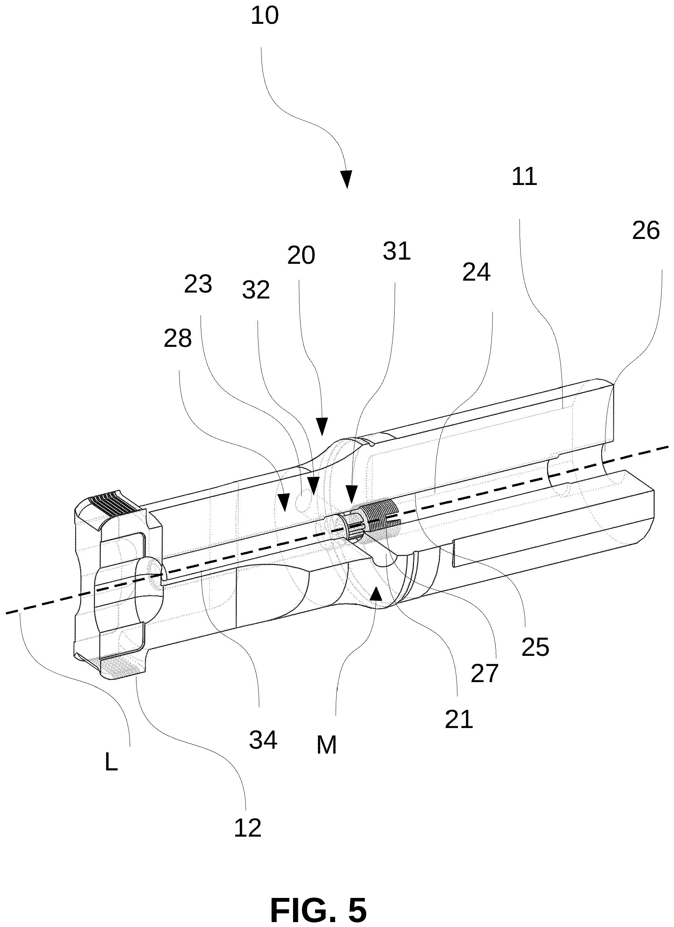

Die Sonotrode 11 gemäss Figur 5 enthält keine Temperierkanäle, sondern lediglich ein Wärmeleiter 34, durch den die Temperierung allein durch Wärmeleitung und ohne zusätzliche Konvektion erfolgt.

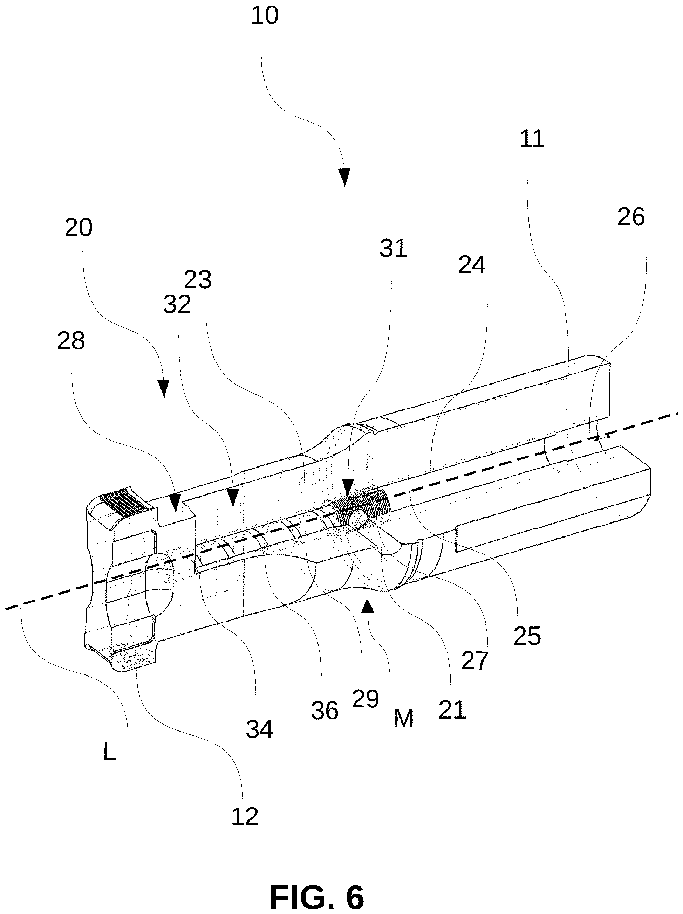

In Figur 6 ist eine weitere erfindungsgemässe Vorrichtung 10 gezeigt. Die Sonotrode 11 enthält eine Bohrung 24 und ein darin aufgenommenes Führungselement 29, welches einstückig mit einem Dichtstopfen 27 ausgebildet ist.

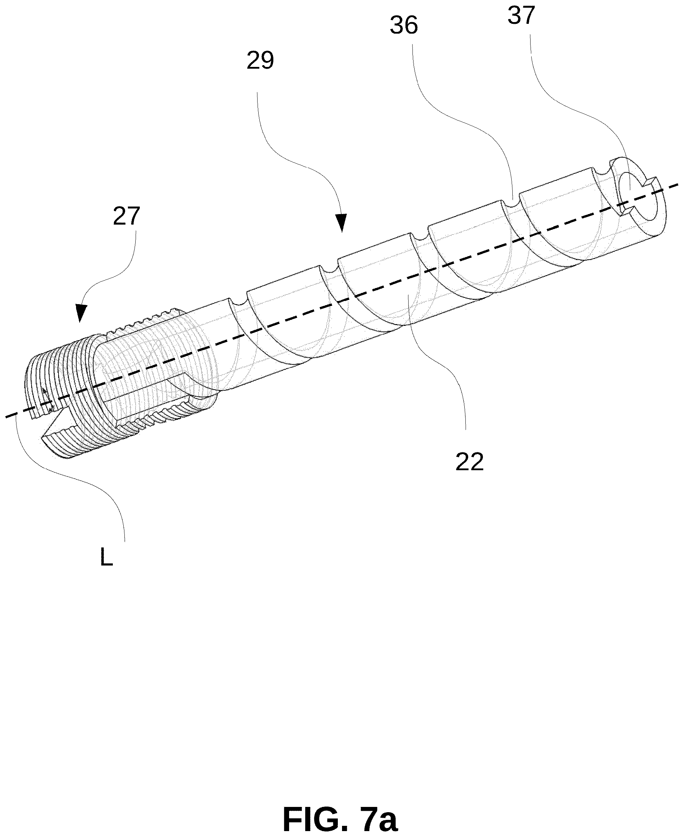

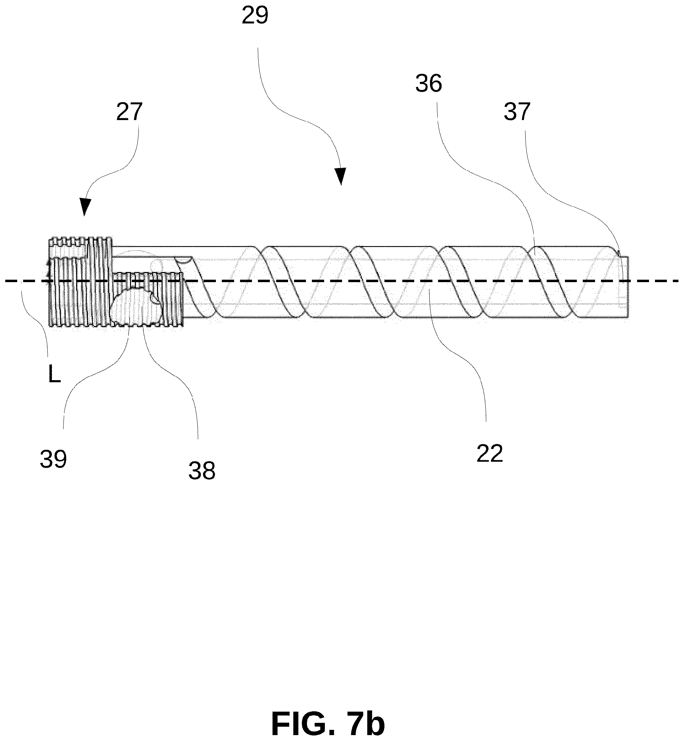

In den Figuren 7a und 7b ist im Detail das Führungselement 29 mit dem Dichtstopfen 27 dargestellt. Das Führungselement 29 enthält eine in seinem Inneren und parallel zur Längsachse L der Sonotrode 11 verlaufende Führungsbohrung, die einen ersten Temperierkanal 22 bildet. Dieser erste Temperierkanal 22 mündet im Bereich einer Schweissfläche 12 der Sonotrode 11 an einer endseitigen Ausmündungsöffnung 37 aus. Das der endseitigen Ausmündungsöffnung 37 gegenüberliegende Ende des ersten Temperierkanals 22 ist mit dem Zuführkanal 21 verbunden, wie aus der weiter unten Diskussion der Figur 7b folgt.

An seiner Aussenseite weist das Führungselement 29 weiterhin eine helixförmige Kerbe 36 auf, die zusammen mit der Innenwand 25 der in der Sonotrode 11 gebildeten Bohrung 24 einen zweiten Temperierkanal 22' definiert (siehe dazu Figur 6). Hierdurch wird eine bezüglich der Umfangsrichtung homogenere Temperierung erzielt. Das der endseitigen Ausmündungsöffnung 37 gegenüberliegende Ende der Kerbe 36 ist direkt oder indirekt mit dem Abführkanal 23 verbunden. Auch dies wird weiter unten im Zusammenhang mit Figur 7b deutlich.

Wie die Figur 7b verdeutlicht, ist das der endseitigen Ausmündungsöffnung 37 gegenüberliegende Ende des ersten Temperierkanals 22 über eine im Dichtstopfen 27 gebildete Querbohrung 38 mit einer umfangsseitigen Ausmündungsöffnung 39 verbunden. Diese umfangsseitige Ausmündungsöffnung 39 ist fluchtend mit dem Zuführkanal 21 ausgerichtet (siehe Figur 6). Das der endseitigen Ausmündungsöffnung 37 gegenüberliegende Ende der Kerbe 36 ist mit dem Zuführkanal 23 verbunden.

Die Ausführungsform gemäss den Figuren 6 bis 7b ermöglicht es, das Temperierfluid in die Nähe der Schweissflächen 12 zu führen, ohne dass es zuvor in direktem Kontakt mit der Sonotrode 11 oder dem durch den zweiten Temperierkanal 22' zurückgeführten Temperierfluid gerät. Hierdurch kann eine effektivere Kühlung erzielt werden.

## Patentansprüche

1. Vorrichtung (10) zum Ultraschallschweissen, enthaltend
- eine Sonotrode (11) mit mindestens einer, bevorzugt mindestens zwei Schweissflächen (12), wobei die Sonotrode (11) bezüglich einer Längsachse (L) zu Ultraschallschwingungen anregbar ist und die Schweissfläche (12) parallel zur Längsachse (L) verläuft,
- eine Temperiereinrichtung (20) zum Temperieren, insbesondere zum Kühlen und/oder Heizen, der Sonotrode (11), mit
- einem Zuführkanal (21), durch den ein Temperierfluid in die Sonotrode (11) einführbar ist,
- mindestens einem im Inneren der Sonotrode (11) verlaufenden Strömungskanal (31), der mit dem Zuführkanal (1) fluidverbunden ist,
- mindestens einer im Inneren der Sonotrode (11) verlaufenden Wärmetransporteinrichtung (32), die mit dem durch den Strömungskanal (31) strömenden Temperierfluid thermisch gekoppelt ist,
- einem Abführkanal (23), durch den das Temperierfluid aus der Sonotrode (11) ausführbar ist und der mit dem Strömungskanal (31) fluidverbunden ist,
**dadurch gekennzeichnet, dass**
- die Wärmetransporteinrichtung (32) zum Wärmetransport entlang der Längsachse (L) ausgebildet und angeordnet ist,
- die Sonotrode (11) mindestens eine Bohrung (24) mit einer Innenwand (25) aufweist, die zumindest teilweise den Strömungskanal (31) begrenzt,
- in der Bohrung (24) ein Führungselement (29) derart angeordnet ist, dass es die Bohrung (24) zumindest entlang eines Teils ihrer Länge in einen ersten Temperierkanal (22) und einen zweiten Temperierkanal (22') aufteilt, sodass das Temperierfluid zumindest teilweise vom Zuführkanal (21) in einer ersten Richtung (R1) entlang der Längsachse (L) durch den ersten Temperierkanal (22) und danach in einer der ersten Richtung (R1) entgegengesetzten zweiten Richtung (R2) durch den zweiten Temperierkanal (22') und zum Abführkanal (23) führbar ist.

2. Vorrichtung (10) gemäss Anspruch 1,
wobei die Wärmetransporteinrichtung (32) zum Wärmetransport in einer Wärmetransportrichtung ausgebildet und angeordnet ist, die zumindest abschnittsweise unter einem Winkel zur Längsachse (L) verläuft, der kleiner als 30°, bevorzugt kleiner als 10°, weiter bevorzugt kleiner als 5° und besonders bevorzugt kleiner als 1° ist.

3. Vorrichtung (10) gemäss einem der vorangehenden Ansprüche,
wobei der Zuführkanal (21) und/oder der Abführkanal (23) in einem lokalen Schwingungsminimum (M) der Sonotrode (11) angeordnet sind, insbesondere in einem gemeinsamen lokalen Schwingungsminimum (M) der Sonotrode (11).

4. Vorrichtung (10) gemäss einem der vorangehenden Ansprüche,
wobei der Zuführkanal (21) und der Abführkanal (23) an verschiedenen Positionen bezüglich der Längsachse (L) angeordnet sind, insbesondere in zwei verschiedenen lokalen Schwingungsminima (M) der Sonotrode (11).

5. Vorrichtung gemäss Anspruch 4,
wobei die Schweissfläche (12) bzw. mindestens eine der Schweissflächen (12) bezüglich der Längsachse (L) zwischen dem Zuführkanal (21) und dem Abführkanal (23) angeordnet ist.

6. Vorrichtung (10) gemäss einem der vorangehenden Ansprüche,
wobei die Innenwand (25) der Bohrung (24) zumindest teilweise mindestens einen der Temperierkanäle (22, 22') begrenzt.

7. Vorrichtung (10) gemäss einem der vorangehenden Ansprüche,
wobei die Bohrung (24) mindestens ein freies Ende (26) aufweist, welches mit einem Dichtstopfen (27) fluiddicht verschlossen ist.

8. Vorrichtung gemäss einem der vorangehenden Ansprüche,
wobei die Bohrung (24) als Sacklochbohrung (24) ausgeführt ist, deren geschlossenes Ende (28) im Bereich der Schweissfläche (12) bzw. mindestens einer der Schweissflächen (12) der Sonotrode (11) angeordnet ist.

9. Vorrichtung (10) gemäss einem der vorangehenden Ansprüche,
wobei die Bohrung (24) mindestens ein freies Ende (26) aufweist, welches mit einem Dichtstopfen (27) fluiddicht verschlossen ist, und das Führungselement (29) vom Dichtstopfen (27) gehalten ist.

10. Vorrichtung (10) gemäss einem der vorangehenden Ansprüche,
wobei die Sonotrode (11) als Linearsonotrode (11) ausgebildet ist, die zu resonanten Längsschwingungen entlang der Längsachse (L) anregbar ist.

11. Vorrichtung (10) gemäss einem der vorangehenden Ansprüche,
wobei der erste Temperierkanal durch eine im Inneren des Führungselements (29) verlaufende Führungsbohrung (22) gebildet ist, die im Bereich einer Schweissfläche (12) der Sonotrode (11) an einer endseitigen Ausmündungsöffnung (37) ausmündet, und der zweite Temperierkanal (22') zwischen dem Führungselement (29) und der in der Sonotrode (11) verlaufenden Bohrung (24) gebildet ist.

12. Verwendung einer Vorrichtung gemäss einem der vorangehenden Ansprüche zum Temperieren, insbesondere zum Kühlen und/ oder Heizen, der Sonotrode (11) der Vorrichtung (10), enthaltend die Schritte
a) Einführen eines Temperierfluids durch den Zuführkanal (21) und in die Sonotrode (11) hinein,
b) Durchführen des Temperierfluids durch den Strömungskanal (22),
c) Abführen des Temperierfluids durch den Abführkanal (23) und aus der Sonotrode (11) heraus.

13. Verwendung gemäss Anspruch 12,
wobei das Temperierfluid eine Flüssigkeit ist, insbesondere Wasser.

## Claims

1. device (10) for ultrasonic welding, comprising
- a sonotrode (11) with at least one, preferably at least two welding surfaces (12), wherein the sonotrode (11) can be excited to ultrasonic vibrations with respect to a longitudinal axis (L) and the welding surface (12) extends parallel to the longitudinal axis (L),
- a temperature control device (20) for controlling the temperature, in particular for cooling and/or heating, of the sonotrode (11), with
- a feed channel (21) through which a temperature control fluid can be introduced into the sonotrode (11),
- at least one flow channel (31) running inside the sonotrode (11), which is fluidly connected to the feed channel (1),
- at least one heat transport device (32) running inside the sonotrode (11), which is thermally coupled to the temperature control fluid flowing through the flow channel (31),
- a discharge channel (23) through which the temperature control fluid can be discharged from the sonotrode (11) and which is fluidly connected to the flow channel (31),
**characterised in that**
- the heat transport device (32) is designed and arranged to transport heat along the longitudinal axis (L),
- the sonotrode (11) has at least one bore (24) with an inner wall (25) which at least partially delimits the flow channel (31),
- a guide element (29) is arranged in the bore (24) in such a way that it divides the bore (24) at least along part of its length into a first temperature control channel (22) and a second temperature control channel (22'), so that the temperature control fluid can be guided at least partially from the feed channel (21) in a first direction (R1) along the longitudinal axis (L) through the first temperature control channel (22) and then in a second direction (R2) opposite to the first direction (R1) through the second temperature control channel (22') and to the discharge channel (23) .

2. Device (10) according to claim 1,
wherein the heat transport device (32) is designed and arranged for heat transport in a heat transport direction which, at least in sections, runs at an angle to the longitudinal axis (L) which is less than 30°, preferably less than 10°, more preferably less than 5° and particularly preferably less than 1°.

3. Aevice (10) according to one of the preceding claims,
wherein the feed channel (21) and/or the discharge channel (23) are arranged in a local vibration minimum (M) of the sonotrode (11), in particular in a common local vibration minimum (M) of the sonotrode (11).

4. dDvice (10) according to one of the preceding claims,
wherein the feed channel (21) and the discharge channel (23) are arranged at different positions with respect to the longitudinal axis (L), in particular in two different local vibration minima (M) of the sonotrode (11).

5. Device according to claim 4, wherein the welding surface (12) or at least one of the welding surfaces (12) is arranged between the feed channel (21) and the discharge channel (23) with respect to the longitudinal axis (L).

6. Device (10) according to one of the preceding claims,
wherein the inner wall (25) of the bore (24) at least partially delimits at least one of the temperature control channels (22, 22').

7. Device (10) according to one of the preceding claims,
wherein the bore (24) has at least one free end (26) which is closed in a fluid-tight manner by a sealing plug (27).

8. Device according to one of the preceding claims,
wherein the bore (24) is designed as a blind bore (24), the closed end (28) of which is arranged in the region of the welding surface (12) or at least one of the welding surfaces (12) of the sonotrode (11).

9. Device (10) according to one of the preceding claims,
wherein the bore (24) has at least one free end (26) which is closed in a fluid-tight manner by a sealing plug (27), and the guide element (29) is held by the sealing plug (27).

10. Device (10) according to one of the preceding claims,
wherein the sonotrode (11) is designed as a linear sonotrode (11) which can be excited to resonant longitudinal vibrations along the longitudinal axis (L).

11. Device (10) according to one of the preceding claims,
wherein the first temperature control channel is formed by a guide bore (22) extending in the interior of the guide element (29) and opening out in the region of a welding surface (12) of the sonotrode (11) at an outlet opening (37), and the second temperature control channel (22') is formed between the guide element (29) and the bore (24) extending in the sonotrode (11).

12. Method for controlling the temperature of, in particular for cooling and/or heating, a sonotrode (11) of a device (10) according to one of the preceding claims, comprising the steps of
a) Introducing a temperature control fluid through the feed channel (21) and into the sonotrode (11),
b) Passing the temperature control fluid through the flow channel (22),
c) Discharge of the temperature control fluid through the discharge channel (23) and out of the sonotrode (11).

13. Method according to claim 12, wherein the temperature control fluid is a liquid, in particular water.

## Revendications

1. Dispositif (10) de soudage par ultrasons, comprenant
- une sonotrode (11) avec au moins une, de préférence au moins deux surfaces de soudage (12), la sonotrode (11) pouvant être excitée en vibrations ultrasoniques par rapport à un axe longitudinal (L) et la surface de soudage (12) s'étendant parallèlement à l'axe longitudinal (L),
- un dispositif de régulation de température (20) pour la régulation de température, en particulier pour le refroidissement et/ou le chauffage, de la sonotrode (11), avec
- un canal d'alimentation (21) à travers lequel un fluide de régulation de température peut être introduit dans la sonotrode (11),
- au moins un canal d'écoulement (31) s'étendant à l'intérieur de la sonotrode (11), qui est en communication fluidique avec le canal d'alimentation (1),
- au moins un dispositif de transport de chaleur (32) s'étendant à l'intérieur de la sonotrode (11), qui est couplé thermiquement avec le fluide de régulation de température s'écoulant à travers le canal d'écoulement (31),
- un canal d'évacuation (23), à travers lequel le fluide de régulation de température peut être évacué de la sonotrode (11) et qui est relié par fluide au canal d'écoulement (31),
**caractérisé en ce que**
- le dispositif de transport de chaleur (32) est conçu et disposé pour le transport de chaleur le long de l'axe longitudinal (L),
- la sonotrode (11) présente au moins un alésage (24) avec une paroi intérieure (25) qui délimite au moins partiellement le canal d'écoulement (31),
- un élément de guidage (29) est disposé dans l'alésage (24) de telle sorte qu'il divise l'alésage (24) au moins le long d'une partie de sa longueur en un premier canal de régulation de température (22) et un deuxième canal de régulation de température (22'), de sorte que le fluide de régulation de température peut être guidé au moins partiellement depuis le canal d'alimentation (21) dans une première direction (R1) le long de l'axe longitudinal (L) à travers le premier canal de régulation de température (22) et ensuite dans une deuxième direction (R2) opposée à la première direction (R1) à travers le deuxième canal de régulation de température (22') et vers le canal d'évacuation (23) .

2. Dispositif (10) selon la revendication 1, dans lequel le dispositif de transport de chaleur (32) est conçu et disposé pour le transport de chaleur dans une direction de transport de chaleur qui s'étend au moins par sections sous un angle par rapport à l'axe longitudinal (L) qui est inférieur à 30°, de préférence inférieur à 10°, plus préférablement inférieur à 5° et particulièrement préférablement inférieur à 1°.

3. Dispositif (10) selon l'une des revendications précédentes, dans lequel le canal d'alimentation (21) et/ou le canal d'évacuation (23) sont disposés dans un minimum local de vibration (M) de la sonotrode (11), notamment dans un minimum local de vibration (M) commun de la sonotrode (11).

4. Dispositif (10) selon l'une des revendications précédentes, dans lequel le canal d'alimentation (21) et le canal d'évacuation (23) sont disposés à des positions différentes par rapport à l'axe longitudinal (L), notamment dans deux minima locaux de vibration (M) différents de la sonotrode (11).

5. Dispositif selon la revendication 4, dans lequel la surface de soudage (12) ou au moins l'une des surfaces de soudage (12) est disposée entre le canal d'alimentation (21) et le canal d'évacuation (23) par rapport à l'axe longitudinal (L).

6. Dispositif (10) selon l'une des revendications précédentes, dans lequel la paroi interne (25) de l'alésage (24) délimite au moins partiellement au moins un des canaux de régulation de température (22, 22').

7. Dispositif (10) selon l'une des revendications précédentes, dans lequel l'alésage (24) présente au moins une extrémité libre (26) qui est fermée de manière étanche aux fluides par un bouchon d'étanchéité (27).

8. Dispositif selon l'une des revendications précédentes, dans lequel l'alésage (24) est réalisé sous la forme d'un trou borgne (24) dont l'extrémité fermée (28) est disposée dans la zone de la surface de soudage (12) ou d'au moins l'une des surfaces de soudage (12) de la sonotrode (11).

9. Dispositif (10) selon l'une des revendications précédentes, dans lequel l'alésage (24) présente au moins une extrémité libre (26) qui est fermée de manière étanche aux fluides par un bouchon d'étanchéité (27), et l'élément de guidage (29) est maintenu par le bouchon d'étanchéité (27).

10. Dispositif (10) selon l'une des revendications précédentes, dans lequel la sonotrode (11) est conçue comme une sonotrode longitudinale (11) qui peut être excitée pour produire des virbations longitudinales résonantes le long de l'axe longitudinal (L).

11. Dispositif (10) selon l'une des revendications précédentes, dans lequel le premier canal de régulation de température est formé par un alésage de guidage (22) s'étendant à l'intérieur de l'élément de guidage (29), qui débouche dans la zone d'une surface de soudage (12) de la sonotrode (11) au niveau d'une ouverture d'embouchure (37) côté extrémité, et le deuxième canal de régulation de température (22') est formé entre l'élément de guidage (29) et l'alésage (24) s'étendant dans la sonotrode (11).

12. Procédé pour régulation de température, en particulier pour refroidir et/ou chauffer, une sonotrode (11) d'un dispositif (10) selon l'une des revendications précédentes, comprenant les étapes suivantes
a) l'introduction d'un fluide de régulation de température à travers le canal d'alimentation (21) et à l'intérieur de la sonotrode (11),
b) Faire passer le fluide de régulation de température à travers le canal d'écoulement (22),
c) l'évacuation du fluide de régulation de température à travers le canal d'évacuation (23) et hors de la sonotrode (11).

13. Procédé selon la revendication 12, dans lequel le fluide de régulation de température est un liquide, en particulier de l'eau.
